# FASCICULE DE BREVET EUROPEEN

(11) **EP 3 025 957 B1**
(45) Date de publication et mention de la délivrance du brevet: **21.03.2018**
(21) Numéro de dépôt: 15195048.2
(22) Date de dépôt: 17.11.2015
(51) Int. Cl.: B64C 25/40, B64C 25/44

(54) **PROCÉDÉ DE FIXATION D'UN ACTIONNEUR D'ENTRAÎNEMENT EN ROTATION D'UNE ROUE D'AÉRONEF**
VERFAHREN ZUR BEFESTIGUNG EINES STELLGLIEDS ZUM DREHANTRIEB EINES LUFTFAHRZEUGRADS
METHOD OF FIXING AN ACTUATOR FOR ROTATABLY DRIVING A WHEEL OF AN AIRCRAFT

(30) Priorité: 27.11.2014 FR 1461545
(43) Date de publication de la demande: 01.06.2016
(73) Titulaire: Safran Landing Systems, 78140 Vélizy-Villacoublay (FR)
(72) Inventeur: MARTIN, Frédéric, 78140 VELIZY-VILLACOUBLAY (FR)
(74) Mandataire: Lavialle, Bruno François Stéphane

(56) Documents cités:
- EP-A1- 2 394 912
- FR-A1- 2 954 752
- US-A- 3 482 806
- US-A1- 2013 327 884

## Description

L'invention concerne un procédé de fixation d'un actionneur d'entraînement en rotation d'une roue d'aéronef.

### ARRIERE-PLAN TECHNOLOGIQUE DE L'INVENTION

On connaît diverses façons de fixer un actionneur d'entraînement en rotation d'une roue d'aéronef sur l'atterrisseur associé. Par exemple, le document FR2954752 décrit l'agencement d'un actionneur d'entraînement en rotation de la roue directement intégré sur le porte-actionneurs du frein qui équipe la roue. Cet agencement permet d'équiper un atterrisseur d'organe d'entraînement de ses roues sans modifier l'atterrisseur. Cependant, il oblige à concevoir de nouveaux portes-actionneurs de frein intégrant un tel actionneur d'entraînement.

### OBJET DE L'INVENTION

L'invention a pour objet de proposer un procédé de fixation de l'actionneur d'entraînement en bas d'un atterrisseur qui ne nécessite aucune modification du frein adjacent à la roue à entraîner.

### PRESENTATION DE L'INVENTION

En vue de la réalisation de ce but, on propose un procédé de fixation sur un atterrisseur d'aéronef d'au moins un actionneur d'entraînement en rotation d'au moins une roue montée à rotation sur un essieu de l'atterrisseur, la roue étant associée à un frein comportant un porte-actionneurs de frein qui porte des actionneurs de freinage, le porte-actionneurs étant enfilé sur l'essieu et arrêté en rotation par un obstacle solidaire de l'atterrisseur qui vient pénétrer dans un des orifices du porte-actionneurs servant à son arrêt en rotation. Selon l'invention, on solidarise l'actionneur d'entraînement sur le porte-actionneurs au niveau d'un orifice d'arrêt du porte-actionneurs qui ne reçoit pas l'obstacle.

Ainsi, l'actionneur d'entraînement n'est pas rapporté directement sur l'atterrisseur, mais par l'intermédiaire du porte-actionneurs du frein dont on exploite l'un des orifices d'arrêt non utilisés. Ainsi, ni l'atterrisseur ni le porte-actionneurs ne nécessitent de modifications structurelles pour recevoir l'actionneur d'entraînement en rotation de la roue.

Selon un aspect particulier de l'invention, l'actionneur d'entraînement en rotation de la roue comporte un arbre de sortie destiné à coopérer avec une couronne d'entraînement de la roue et qui passe au travers de l'orifice d'arrêt du porte-actionneurs du frein lorsque l'actionneur d'entraînement est en position sur le porte-actionneurs du frein.

Selon un autre aspect particulier de l'invention, les moyens de solidarisation comprennent un berceau qui est solidarisé aux orifices d'arrêt de deux portes-actionneurs en regard de deux freins de roues portées par le même essieu, l'actionneur d'entraînement étant rapporté sur le berceau.

### PRESENTATION DES FIGURES

L'invention sera mieux comprise à la lumière de la description qui suit d'un mode particulier de mise en oeuvre de l'invention en référence aux figures des dessins annexés parmi lesquelles :
- La figure 1 est une vue schématique éclatée d'un atterrisseur équipé d'une roue (sans son pneumatique pour plus de clarté), d'un frein de la roue et d'un actionneur d'entraînement en rotation de la roue selon l'invention ;
- La figure 2 est une vue de face partielle de l'atterrisseur, la roue, les disques, et l'essieu ayant été enlevés, la couronne d'entraînement de la roue ayant été partiellement coupée ;
- La figure 3 est une vue schématique éclatée selon un deuxième mode de mise en oeuvre de l'invention dans lequel l'actionneur est disposé sur un berceau s'étendant entre deux portes-actionneurs.

### DESCRIPTION DETAILLEE D'UN MODE DE MISE EN OEUVRE DE L'INVENTION

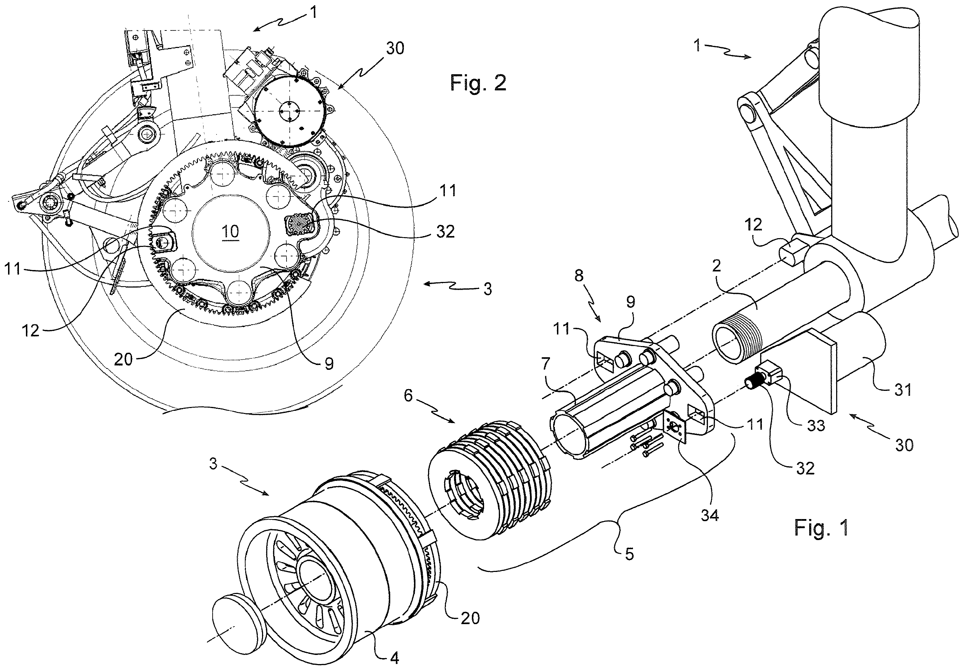

Selon un premier mode de mise en oeuvre de l'invention illustré aux figures 1 et 2, l'invention se rapporte à un atterrisseur 1 d'aéronef portant un essieu 2 sur lequel une roue 3 est montée pour tourner. La roue 3 comporte une jante 4 portant un pneumatique et est associée à un frein 5 comportant une pile de disques de friction 6 enfilée sur un tube de torsion 7 relié à un porte-actionneurs 8 qui porte des actionneurs de freinage (ici des actionneurs hydrauliques) destinés à imposer un effort de presse sur les disques 6. Ici, le porte-actionneurs comporte une platine 9 qui reçoit les actionneurs de freinage (par exemple des pistons hydrauliques, ou des actionneurs électromécaniques) et qui présente un orifice central 10 circulaire pour pouvoir être enfilé sur l'essieu 2. Pour arrêter le porte-actionneurs en rotation, la platine 9 comporte deux orifices d'arrêt 11 (ici de section sensiblement rectangulaire aux coins arrondis) de part et d'autre de l'orifice central, de sorte que l'un des orifices vienne en regard d'un obstacle 12 qui saille de l'atterrisseur pour pénétrer dans l'orifice d'arrêt en regard, et ainsi assurer l'arrêt en rotation du porte-actionneurs 8. Tout ceci est bien connu et n'est rappelé qu'à titre d'illustration.

On remarquera que le porte-actionneurs 8 est symétrique est peut être utilisé indifféremment pour la roue droite ou pour la roue gauche, ce qui explique la présence de deux orifices d'arrêt 11 diamétralement opposés.

L'atterrisseur est équipé de moyens d'entraînement de la roue en rotation. Ces moyens comportent ici une couronne d'entraînement 20 fixée à la jante 4 de la roue 3, et un actionneur d'entraînement 30, comportant un moteur électrique 31 (réducté ou non) dont l'arbre de sortie est équipé d'un pignon de sortie 32 qui coopère avec la couronne d'entraînement 20 pour entraîner la roue 3 en rotation.

Selon l'invention, l'actionneur d'entraînement 30 est ici directement solidarisé au porte-actionneurs 8 par l'intermédiaire de l'orifice d'arrêt 11 resté libre. On exploite l'orifice d'arrêt non utilisé pour l'arrêt en rotation du porte-actionneurs pour y fixer l'actionneur d'entraînement en rotation 30.

Plus précisément ici, l'actionneur d'entraînement 30 comporte une protrusion 33 donc la section est identique à celle de la section de l'orifice d'arrêt 11 dans laquelle elle vient se loger. L'arbre de sortie de l'actionneur passe dans cette protrusion 33, et donc au travers de l'orifice d'arrêt 11 associé de sorte que le pignon de sortie 32 débouche naturellement à proximité de la couronne d'entraînement 20 de la roue 3. L'arbre de sortie peut ainsi être pourvu d'un palier au plus proche du pignon de sortie 32 pour reprendre efficacement les efforts transverses sans flexion excessive de l'arbre de sortie.

On prévoira tout moyen adéquat d'immobilisation de l'actionneur d'entraînement sur le porte-actionneurs. Il peut s'agir comme ici d'une platine 34 rapportée et vissée de l'autre côté de la protrusion 33 une fois l'actionneur en place pour solidariser l'actionneur au porte-actionneurs. Cette disposition de l'invention permet l'utilisation d'atterrisseurs et de porte-actionneurs aux interfaces mécaniques inchangées, de sorte que l'actionneur d'entraînement peut être installé sur des aéronefs déjà en service. La forme non circulaire de l'orifice d'arrêt permet en outre une fixation solide et naturellement arrêtée en rotation.

L'actionneur d'entraînement 30 peut être solidarisé au porte-actionneurs 8 avant le montage de ce dernier sur l'atterrisseur. Alternativement, l'actionneur d'entraînement 30 peut être démonté et fixé sur le porte-actionneurs 8 alors que celui-ci est déjà monté sur l'atterrisseur, et même alors que la roue 3 est montée sur l'atterrisseur.

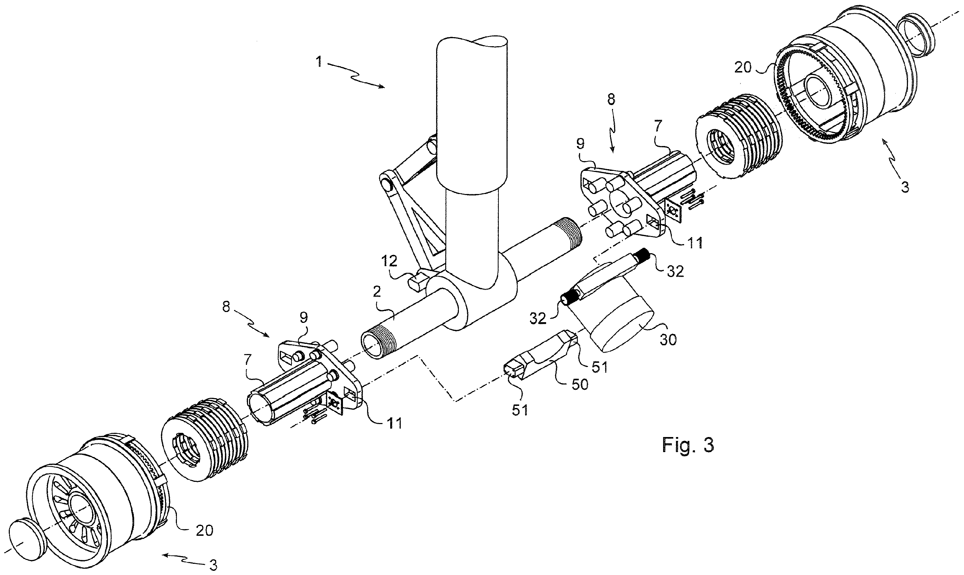

Selon un deuxième mode de mise en oeuvre illustré à la figure 3, l'actionneur d'entraînement 30 est rapporté sur un berceau 50 comportant deux extrémités 51 engagées dans les orifices d'arrêt 11 libres des portes-actionneurs 8 des freins des roues 3 toutes deux portées par le même essieu. Ici, l'actionneur 30 comporte deux pignons de sortie 32 qui ne peuvent s'étendre au travers des orifices d'arrêt 11 puisque ceux-ci sont occupés par les extrémités 51 du berceau 50. Les pignons de sortie s'étendent par-dessus les platines 9 des porte-actionneurs 8 pour coopérer avec les couronnes d'entraînement 20 des roues 3.

L'invention n'est pas limitée à ce qui vient d'être décrit, mais englobe au contraire toute variante entrant dans le cadre défini par les revendications. En particulier, bien que dans le premier mode de mise en oeuvre, l'arbre de sortie de l'actionneur d'entraînement passe au travers de l'orifice d'arrêt du porte-actionneurs, l'arbre de sortie pourra saillir sur le côté du porte-actionneurs, avec l'inconvénient d'une longueur libre plus importante. Bien que dans le deuxième mode de mise en oeuvre, le berceau ne porte qu'un actionneur d'entraînement, il pourra porter deux actionneurs d'entraînement collaborant chacun avec l'une des roues.

## Revendications

1. Procédé de fixation sur un atterrisseur (1) d'aéronef d'au moins un actionneur d'entraînement en rotation (30) d'au moins une roue (3) montée à rotation sur un essieu (2) de l'atterrisseur, la roue étant associée à un frein (5) comportant un porte-actionneurs (8) avec une platine (9) qui porte des actionneurs de freinage et qui comporte un orifice central pour être enfilée sur l'essieu ainsi que deux orifices d'arrêt en rotation (11) s'étendant de façon diamétralement opposée de part et d'autre de l'orifice central de sorte que, quand le porte-actionneurs est enfilé sur l'essieu, il est arrêté en rotation par un obstacle (12) solidaire de l'atterrisseur qui vient pénétrer dans un des orifices d'arrêt (11) de la platine, **caractérisé en ce que** l'on rapporte et l'on fixe l'actionneur d'entraînement sur le porte-actionneurs au niveau de l'orifice d'arrêt de la platine qui ne reçoit pas l'obstacle.

2. Procédé de fixation selon la revendication 1, dans lequel l'actionneur d'entraînement (30) est fixé au porte-actionneurs (8) du frein (5) alors que ce dernier est monté sur l'essieu (2) de l'atterrisseur.

3. Procédé de fixation selon la revendication 1, dans lequel l'actionneur d'entraînement (30) comporte une protrusion (33) adaptée à être introduite dans l'orifice d'arrêt (11) du porte-actionneurs (8), et en ce que l'on introduit cette protrusion dans l'orifice d'arrêt du porte-actionneurs.

4. Procédé de fixation selon la revendication 3, dans lequel on rapporte une platine d'immobilisation (34) au bout de la protrusion (33), alors que celle-ci est engagée dans l'orifice d'arrêt (11).

5. Procédé de fixation selon la revendication 3, dans lequel l'actionneur d'entrainement comporte un arbre de sortie muni d'un pignon de sortie (32) pour engrener avec une couronne d'entraînement (20) de la roue (3), l'arbre de sortie débouchant de la protrusion (33).

6. Procédé de fixation selon la revendication 1, dans lequel on dispose un berceau (50) comportant deux extrémités (51, 51) engagées dans les orifices d'arrêt (11) des portes-actionneurs (8) des freins des roues (3) toutes deux portées par le même essieu, l'actionneur d'entraînement étant rapporté sur le berceau.

## Patentansprüche

1. Verfahren zur Befestigung mindestens eines Drehantriebsaktors (30) zum Drehantrieb mindestens eines Rades (3) an einem Luftfahrzeugfahrwerk (1), wobei das Rad drehbar auf einer Radachse (2) des Fahrwerks gelagert ist, wobei das Rad mit einer Bremse (5) verbunden ist, die einen Aktorenträger (8) mit einer Platte (9) umfasst, die Bremsaktoren trägt und die eine zentrale Öffnung umfasst, um auf die Radachse aufgeschoben zu werden, sowie zwei Drehblockieröffnungen (11), die sich diametral entgegengesetzt zu beiden Seiten der zentralen Öffnung erstrecken, so dass, wenn der Aktorenträger auf die Radachse aufgescfroben ist, er von einem fest mit dem Fahrwerk verbundenen Hindernis (12), das in eine der Blockieröffnungen (11) der Platte eindringen wird, in Drehung blockiert wird, **dadurch gekennzeichnet, dass** man den Antriebsaktor an dem Aktorenträger im Bereich der Blockieröffnung der Platte, die das Hindernis nicht aufnimmt, ansetzt und befestigt.

2. Befestigungsverfahren nach Anspruch 1, bei dem der Antriebsaktor (30) am Aktorenträger (8) der Bremse (5) befestigt ist, während diese letztgenannte auf der Radachse (2) des Fahrwerks gelagert ist.

3. Befestigungsverfahren nach Anspruch 1, bei dem der Antriebsaktor (30) einen Vorsprung (33) umfasst, der dazu geeignet ist, in die Blockieröffnung (11) des Aktorenträgers (8) eingefügt zu werden, und dass man diesen Vorsprung in die Blockieröffnung des Aktorenträgers einfügt.

4. Befestigungsverfahren nach Anspruch 3, bei dem man am Ende des Vorsprungs (33) eine Feststellplatte (34) anfügt, während der Vorsprung in die Blockieröffnung (11) eingreift.

5. Befestigungsverfahren nach Anspruch 3, bei dem der Antriebsaktor eine Abtriebswelle umfasst, die mit einem Abtriebsritzel (32) versehen ist, um mit einem Antriebskranz (20) des Rades (3) in Eingriff zu kommen, wobei die Abtriebswelle aus dem Vorsprung (33) herauskommt.

6. Befestigungsverfahren nach Anspruch 1, bei dem man über einen Halter (50) verfügt, der zwei Enden (51, 51) umfasst, die in die Blockieröffnungen (11) der Aktorenträger (8) der Bremsen der Räder (3) eingreifen, die beide von der gleichen Radachse getragen werden, wobei der Antriebsaktor auf dem Halter befestigt ist.

## Claims

1. Method for fixing to an aircraft landing gear (1) at least one actuator (30) for rotatably driving at least one wheel (3) which is rotatably mounted on an axle (2) of the landing gear, the wheel being associated with a brake (5) which comprises an actuator carrier (8) having a plate (9) which carries brake actuators, and which has a circular central hole 10 in order to be able to be fitted onto the axle and two rotation stop holes (11) diametrically opposed at one side and the other of the central hole so that, when the actuator carrier is fitted onto the axle, it is stopped in terms of rotation by an obstacle (12) which is fixedly joined to the landing gear and which is introduced into one of the stop holes (11) of the plate, **characterised in that** the drive actuator is attached and fixed to the actuator carrier in the region of the stop hole of the plate which does not receive the obstacle.

2. Fixing method according to Claim 1, wherein the drive actuator (30) is fixed to the actuator carrier (8) of the brake (5) when it is mounted on the axle (2) of the landing gear.

3. Fixing method according to Claim 1, wherein the drive actuator (30) comprises a protrusion (33) which is capable of being introduced into the stop hole (11) of the actuator carrier (8), and in that this protrusion is introduced into the stop hole of the actuator carrier.

4. Fixing method according to Claim 3, wherein an immobilisation plate (34) is fitted at the end of the protrusion (33), when it is engaged in the stop hole (11).

5. Fixing method according to Claim 3, wherein the drive actuator comprises an output shaft which is provided with an output pinion (32) in order to engage with a drive ring (20) of the wheel (3), the output shaft opening from a protrusion (33).

6. Fixing method according to Claim 1, wherein there is provided a cradle (50) which comprises two ends (51, 51) which are engaged in the stop holes (11) of the actuator carriers (8) of the brakes of the wheels (3) which are both carried by the same axle, the drive actuator being attached to the cradle.
